# EUROPEAN PATENT APPLICATION

(11) **EP 2 058 758 A1**
(43) Date of publication of application: **13.05.2009**
(21) Application number: 08006279.7
(22) Date of filing: 31.03.2008
(51) Int. Cl.: G06Q 30/00

(54) **Process and system of performing a sales cycle by remote means and automated means, specifically to implement software**

(30) Priority: 01.11.2007 BR pl0705190
(71) Applicant: Totvs S.A., 02511-000 Sao Paulo SP (BR)
(72) Inventor: De Lucena Cosentino, Laercio Jose, 02511-000 Sao Paulo (BR)
(74) Representative: Novagraaf IP

(57) **Abstract**

The present invention refers to methods and systems to carry out a cycle of sales and the implementation of a software. The present invention aims to add value to all the phases of the conventional sales cycle and, particularly, to the sales cycle of a customized product, such as software, because it allows greater interaction between providers and prospects, without prejudice to the virtualization and automation of sales processes.

According to the demonstration, implementing, training and technical support steps are carried out remotely and in real time by a physical person having a participatory presence, conducting interaction between provider and at least part of the prospects or clients by entering in real time interactive information (F_{IS}) from an interactive system (IS) which are specific of each step (Sc, St, Spa) to direct the interactive exchange of the next step, the interactive information and exchange being formatted (FS, FM, K) to define specific client profiles (P2, P3) from specific formats (F2, F3) adapted from step to step through a converter (C).

## Description

### FIELD OF THE INVENTION

The present invention refers to methods and systems to carry out a sales cycle. More specifically, the present invention refers to a process and system to carry out a sales cycle by which the sales cycle is carried out at least partially in a remote and advantageously automated form.

The present invention allows greater interaction between offers and prospects or sellers and clients, besides streamlining the sales cycle chain by using virtual means, such as the Internet, and preferably automated means.

The present invention is particularly useful to carry out a sale of an intangible product, even if said intangible product can be "transported" or handled by physical means, such as software.

The present invention also teaches such a process and system to implement software product.

### BACKGROUND OF THE INVENTION

A sales cycle is a succession of connected steps that occur with a view to sealing a deal for a certain product or service. It generally begins by a prospecting phase and, after concretizing the sale, it extends to the support and relationship with the client, or the so-called 'post-sales' phase.

Naturally, depending on the product or service to be commercialized, the cycle may comprise more or fewer specific phases needed for this or that product or service, by nature of the product or service offered, or by regulatory or legal impositions.

However, a conventional or generic sales cycle can be structured into phases chosen between at least distinct and well-defined phases, each one being aimed to seal the deal. In brief, this sales cycle is as follows.

The initial phase is a prospecting phase which generally occurs when there is a desire to generate new clients, and may be defined as an organized process to seek clients for the products or services offered. The prospecting phase may also be called as such by extension when instead of actually prospecting for a new client, a potential client seeks the provider of a product or service, which it believes will satisfy its needs, and should have complementary information.

Jointly with the initial phase, or occurring before it, marketing campaigns may be carried out in different media, such as television, the Internet, promotional catalogs etc. to disclose the product or service offered. Actions may be aimed at a specific public, both in relation to the media used and the trade dress, depending on the nature of the product or services placed on the market.

Having identified the client and its needs in the prospecting phase, then comes the approach or demonstration of the product or service offered. In the case of customizable products, this demonstrative phase preferably also includes a presentation and/or demonstration formatted in accordance with the characteristics and needs of the prospect. It is desirable that the presentation be modeled according to the profile of the prospect. What is more, a participatory presence between the provider and the prospect is desirable to help define and clearly align the problems and needs, to highlight the positive points of the product or service that might assist the prospect in solving his problem or meeting his need, and also to clarify any queries and to explain the technical or commercial aspects, without prejudice to other aspects.

Once these initial steps are over, then comes the business offer in which amounts, methods of payment, contract terms, technical characteristics of the product etc. are discussed. This is to say, the negotiation phase is primarily concerned with the commercial and technical aspects of the product or service.

Once the business aspects and sales terms for the product or service are finalized, then the contract is sealed or signed, after which the service will be rendered or the product will be delivered.

Particularly in relation to customizable products and services, delivery is not immediate. Performance of the service requires a certain amount of time at the client for implementation of the product. This implementation *phase* is typically used when referring to software products, particularly software relating to business management. Such software often needs to be adopted and tailored to adapt to the client's business and operational needs.

Still possible within this panorama is the training phase of the personal that will be qualified to become software users.

Lastly, the sales cycle having come to an end, is the post-sales phase, which can be synthetically defined as support and relationship with the client.

Naturally, and as stated above, the cycle now disclosed herein is a classic or conventional cycle. Depending on the nature and the characteristics of the product or service offered, there may be one or more steps, or even the elimination of certain phases.

The state of the art on this subject matter is vast. Particularly with the advent of the Internet in the 1990s, countless forms have been proposed, both in relation to systems as well as processes, to carry out sales using virtual and/or electronic means. These electronic and virtual processes of doing business have come to be known today as *e-Business.*

However, the state of the art to-date is deficient in the sense of providing a global solution for the sales cycle. In other words, the solutions found are focused on the virtualization and/or realization of electronic or automated processes for just one or some of the phases of the conventional sales cycle, as set forth above.

Thus, the solutions found have a series of weaknesses and drawbacks.

Firstly, concerning the prospecting phase, marketing actions over television, Internet (by sites accessed), physical media (such as catalogs) and physical media with digital content (such as promotional CDs and DVDs) etc. are known. These marketing actions, however, are often isolated, and there is no interaction with the prospect phase to develop an adequate sales cycle chain.

When demonstrating to or approaching a client, there is also a limit in the state of the art in the sense that such demonstrations are static, that is, they are generally electronic files that the prospect can download and that contain pre-defined presentations or videos with a certain promotional message on the product or service offered. Accordingly, interaction is limited or non-existent.

This is prejudicial in the sense that specific queries the client has cannot be immediately answered. Additionally, there is a limitation in relation to other matters or personalized demonstrations that can be made to the prospect.

An attempt is made to redress this situation by providing standardized answers to frequently asked questions (FAQ) or service e-mails, by which specific answers may be sent.

Yet these attempts to resolve this drawback are still inadequate, because in the case of FAQ e-mails, it is necessary to locate the desired answer from the many questions, causing a time delay, which is unpractical or unfriendly. In the case of service e-mails, the answer to the question may take several days, causing a rupture of interest by the prospect.

Furthermore, automated sales are extremely limited to products and/or services that are not customizable to the needs of the prospects, as is the case with finished products, such as DVDs, books, electronic products etc. In some products where a certain degree of customization is foreseen, this is generally limited to accessories or aesthetic characteristics, such as choice of color of the product.

In the case of products or services which have to be implanted or tailored at the client's facilities, after the deal has been finalized, it is not possible to identify a global solution in the state of the art that is associated to improve the other prior phases in the sales cycle, and in which implementation or tailoring is performed by remote means.

Additionally, although there are known e-learning solutions, that is, teaching and learning processes by remote means, there is equally no global solution that can be associated to the other steps of the sales cycle, at the point of implementation and training of a product at the client, by remote means.

Therefore, the objectives of the present invention are designed to overcome the inconveniences cited above. More particularly, the objective of the present invention is to add value to all the phases of the conventional sales cycle and, particularly, to the sales cycle of a customized product, such as software, because it allows greater interaction between *providers* and prospects, without prejudice to the virtualization and automation of sales processes.

Another objective of the present invention, besides providing greater interaction between offers and prospects, is that it allows the participation of other persons, in addition to those directly involved in the sales cycle, as a means of demonstrating the product or service offered as a means of disclosure and marketing.

Yet another objective of the present invention is to allow the convergence of technologies to carry out the sales cycle by way of different media.

### DESCRIPTION OF THE INVENTION

The objectives stated above, among others, are achieved, according to the present invention, by particular interactions in a step to sway the next step.

More specifically, the present invention refers to a sales cycle process that comprises at least the steps of:
- carrying out a demonstration of said product or service in connection with a client profile,
- implementing and delivering said product or service to the client,
- training the client to use said product or service, and
- providing technical support to client in relation to said product or service,
   wherein the demonstration, implementing, training and technical support steps are carried out remotely and in real time by a physical person having a participatory presence, conducting interaction between *provider* and at least part of the prospects or clients by entering in real time interactive information which are specific of each step to direct the interactive exchange of the next step, the interactive information and exchange being formatted to define specific client profiles adapted from step to step.

Without prejudice to visits to clients or prospects, which can be carried out according to convenience or demand of the prospects or clients, the process of the present invention allows the entire sales cycle to be carried out remotely and electronically.

One or more characteristics can also be present in the process of the present invention:
- each format includes a series of calibrated items specific of a corresponding current step in order to specify a client profile in connection with needs of the current step, said profile being then applied to calibrate the items of the next step;
- disclosing a product or service in a prospective phase;
- negotiating the technical and contracting extents after the demonstration phase;
- the disclosure step of the product or service is carried out by marketing actions over Internet;
- the demonstration step is carried out by a customized presentation for a specific prospect or client, such that the client can interact with the demonstrator;
- the demonstration step is carried out by a customized presentation for a specific prospect or client, such that the client can interact with the demonstrator, and persons other than the prospect or the client can also interact with the demonstrator;
- the demonstration step is carried out by customized presentation for a specific prospect or client, such that the client can interact with the demonstrator, and persons other than the prospect can watch the presentation, without interaction with the demonstrator;
- the demonstration step is preceded by a demonstration-scheduling step;
- the negotiating step or delivery of said product or service is followed by a contract-sealing step by remote means using a digital signature;
- the implementation step or delivery of said product of service to the client is carried out remotely over Internet, with real time interaction between the parties;
- the implementation step or delivery of said product of service to the client is carried out remotely over Internet, with real time interaction between the parties and, concomitantly, in real time and without interaction by other participants;
- there is a limited number of interactive accesses between the parties;
- there is no limited number of non-interactive accesses between the parties;
- the process steps are achieved by means of Internet, Digital TV network, or cellular and/or telephone communication network..

The present invention is particularly useful to carry out a sale of an intangible product, such as software and refers particularly to a process to implement a software product.

The present invention also refers to a system for carrying out the process of the present invention.

The system for carrying out a sales cycle according to the invention comprises means at the provider side to disclose an object remotely, means to make a presentation or demonstration of the object in real time and with participatory presence, means to implement or deliver the object also by remote means, means to carry out remote training, and means to provide client support by remote means, and comprises means at the side of the prospect to access a network for interaction with the provider.

Said means may be any suitable means for the transmission of data by remote means over a network, such as computers, servers, PDA's or digital TV.

The network can be a data communication network, such as the Internet, a mobile telephony network or a Digital TV network having a return channel. Third parties can access the network, but without interactive participation.

Finally, the present invention refers to a software implementation system by remote means, which comprises means to carry out a demonstration of the software, in real time and with a participatory presence; means to deliver and implement the software; means to carry out remote training at the client; and means to provide client support by remote means.

Said means may be any suitable means for the transmission of data by remote means over a network, such as computers, servers, PDAs or digital TV, and connected to the network through a communication backbone.

The network can be a suitable data transmission network, such as the Internet, a mobile telephony network or a Digital TV network having a return channel, and the participants can access the network and participate interactively or merely as listeners.

### BRIEF DESCRIPTION OF THE DRAWINGS

The present invention will now be described in relation to a particular embodiment with reference to the attached drawings. Said drawings didactically represent, respectively:
- in figures 1 and 2, diagrams of the sales cycle system and of such a system to implement software;
- in figure 3, a diagram of items formats for successive steps in connection with client profiles converter and interactions resulting of the sales cycle system.

### DESCRIPTION OF PARTICULAR EMBODIMENTS

The processes and systems of the present invention are useful for the optimized embodiment of a sales cycle process and the software implementation process, by remote, interactive and/or automated means.

According to a first embodiment, the process starts by prospecting and/or marketing actions to disclose a certain product or service offered and the generation of clients, respectively.

In order to facilitate the description, both the term 'products' and the term 'services' will be referred to as "objects".

Prospecting actions can be accompanied by marketing actions, simultaneously or successively. Thus, in this present specification, prospecting shall be understood to be a coordinated action to generate clients, said coordinated action being accompanied by marketing actions and disclosure of the object or not.

The initial step of prospecting is carried out by electronic or remote means.

By electronic or remote means shall also be understood to be an action unleashed without the physical presence of a person at the place of action, that is, it can be carried out remotely, and where the physical presence or the use of physical products for the action to be carried out is not necessary.

These electronic means are primarily actions focused on the Internet, by means of specific sites, or by a convergence of media through other networks, such as by PDAs (Personal Digital Assistant) in cellular telephone networks, or also on digital TV networks that have a return channel that permits interaction in a Digital TV environment.

The action of prospecting can be different depending on the nature of the object and the target profile client of such object. Such target profiles for the prospecting phase are marketed with the conception of the object. Therefore, prospecting in itself is not relevant for the scope of the present invention, provided that it is carried out by remote and electronic means.

Naturally, other non-electronic or remote means can be used for a prospecting step, provided that at least part of the prospecting step is carried out by remote and electronic means, such as defined above.

The prospecting step can be eliminated when the prospect is already a consolidated client or when the prospect itself seeks the provider to acquire the desired object.

Next comes the presentation of the object to the prospect. The presentation, as it occurs today by remote means, such as over the Internet, for example, is generally by information contained on the own web site of the provider of the object or by electronic files, such as Power Point presentations, promotional videos etc, that the prospect can access.

The presentations of objects in state of the art systems are not interactive or have limited interactivity, because the provider is not physically present, which could, in real time and immediately, solve any queries the prospect may have in relation to the object, for example.

Moreover, the content of the forms of presentation of the objects by remote and electronic means, as found in the state of the art, is static in the sense that it does not allow customization to meet the needs or specific expectations of the prospect.

The present invention proposes that the presentation step of the object be carried out by remote means, but with participation by the provider. Accordingly, the presentation may be customized for each prospect and allow real time interaction between prospect and provider, besides not requiring that the provider or prospect physically go to a specific presentation site.

Thus, the preliminary relationship between provider and prospect is substantially improved by allowing greater interactivity between the parties, providing a presentation of different aspects of the object according to a format that is customized to the supposed needs and expectations of the prospect to shape a specific profile, and avoiding any queries or subsequent discussions not be settled immediately, if it is not possible by conventional electronic means, as indicated above.

Other participants besides the provider and prospects may be associated to this presentation step, with the possibility of interacting at least partially in order to better specify the profile. Interaction may be by any suitable means, either by way of a personal computer using the Internet or with PDAs in a telephone network, or by television in the digital TV network having a return channel.

Since the participatory presentation may not be available full time, due to office hours, time zone differences, or availability of the presenter, a presentation scheduling step may precede this step, scheduled either by the provider or by the prospects, in which a limited or unlimited number of interactive participants may be defined and/or a limited or unlimited number of listening participants, that is, not interactive, which may equally be defined.

If the prospect is interested in the object, negotiation of technical modifications and/or adaptations items defining a format is entered and contract sealing may follow. In this step, the items are chosen regarding the specific profile that was defined in the presentation step. The resulting format define a client profile that is used in the next step. Furthermore, according to an embodiment of the present invention, a contract sealing step can also be carried out remotely, by electronic means, using an electronic signature or also encryption means, both public switch and asymmetric.

After sealing the contract, if applicable, or after the object is accepted by the prospect, thus becoming a client, then the object is delivered or implemented.

In the case of non-customizable objects, that is, those that are generally characterized by finished products that cannot be modified or adapted to the desires or needs of clients, delivery only to the client is carried out by conventional means. Typically, said objects are books, DVDs, electronic apparatus etc, in which the client merely chooses the product he wants, but there is no alteration to the product itself.

If the object is a product that allows a certain degree of customization, such as, for example, the choice of color or product options, delivery is equally carried out by conventional means, after determining the model or characteristics of the product.

However, certain products and services require adaptation to the needs or wishes of clients or, also, products that are sold in association with services, which is typically the case of a software. Often a software, and particularly a software designed for business management, besides constituting a product to be delivered, is also associated with services of implementation, tailoring or, also, customization by way of specific programming, to meet and comply with the client's operating requirements. Such a customization is conducted by the provider within the limits of the format of the items selected in accordance with the profile of the client established in the negotiating step. The selected items of the format built the profile client adapted to the next step.

Consequently, the product is not just delivered, but there is also an associated service so that the product performs its function adequately.

According to an embodiment of the present invention, in the case of a product with digital content, the delivery may be carried out remote means, by sending a file over a network, such as the Internet or a mobile telephone network or Digital TV.

Also according to the present invention, the implementation is carried out remotely, through a network connection between vendor and client. Particularly at this step, there may be interactive participation between provider and client, and possibly also the interactive or non-interactive participation of one or more persons other than the client. This interactive or non-interactive participation (that is, participants are merely listeners) of the implementation step of a client can be used as a means of disclosure or demonstration of a real case to other prospects or clients. Put otherwise, it can be used as an instrument of marketing, disclosure and demonstration of the product in a real case of implementation at already consolidated clients for new prospects, or else as a means of training for other clients or business partners.

With implementation comes client training, which may occur simultaneously or after implementation. The present invention also provides for the remote training of the client, by way of a network, be it a telephone network, Digital TV or the Internet. In the same way as during the implementation step, the training step allows interaction between provider and client, and also an interactive or non-interactive participation by persons other than the client, either as a marketing action or training. The training step is carried out on the provider side by selecting the options in a format according to the client profile defined in the customization step. This selection provides a specific profile for the next step.

After this, comes technical support and relationship with the client by way of post-sales action, that are preferably carried out by remote means, such as, for example, chats over the Internet or call center, without excluding any others. This post-sale step is carried out by the provider on the same scheme than formerly, that is in the frame of an items format selected in view of the profile resulting from the training step.

The present invention also discloses a software implementation process by remote means, as set forth in the description of the invention above.

The process according to this second aspect of the invention retakes the steps that precede and complete the sales cycle of a software, and focuses solely on the demonstration, implementation, training and technical support for the client by remote means, according to the items format of each step selected by the client profile defined in the preceding step.

The process begins by the presentation and/or demonstration of the software product to the client, in which the presentation or demonstration is carried out by remote means, but with the participatory presence of the provider. Therefore, and as shown above, it is possible that presentation and also the demonstration of the software product be customized for the client's needs and expectations. The fact that it is carried out in real time and with a participatory presence, albeit remote, of both the provider and the client, allows the parties to interact.

Hence, this interactivity allows any queries or discussions that occur concomitantly or which arise after the presentation or demonstration to be settled and developed at the same time, substantially improving the relationship.

Associated to this step of presentation and/or demonstration of the product is the fact that other parties may participate in addition to the vendor and the client, said participants being able or unable to interact.

Interaction may be by any suitable means, either through personal computer using the Internet or PDAs in a telephone network or television in a digital TV network having a return channel.

Since the participatory presentation may not be available full time, due to office hours, time zone differences, or availability of the presenter, the presentation scheduling step may precede this step, scheduled either by the provider or by the prospects, in which a limited or unlimited number of interactive participants may be defined and/or a limited or unlimited number of listening participants, that is, not interactive, which may equally be defined.

After the presentation and/or demonstration of the software product, implementation at the client follows, in which parameters will be defined to meet the specific requirements of each client. Implementation encompasses both the delivery of the digital content of the software that is carried out by remote means, by sending a file via a network, such as the Internet or a mobile telephone or digital TV network, as well as the implementation thereof, also by remote means, through a network connection between vendor and client. This step includes interactive participation between vendor and client and may also comprise interactive or non-interactive participation of one or more parties other than the client.

This interactive or non-interactive participation (that is, participants being merely listeners) in the implementation step can be used as a form of disclosure or demonstration of a real case to other prospects or clients. Accordingly, it can be used as an instrument of marketing, disclosure and demonstration of the product of a real case in use at already consolidated clients for new prospects or else as a form of training for other clients or business partners.

With the implementation comes client training, which may occur simultaneously or after implementation. The present invention also allows the remote training of the client, also through a network, be it a telephone or digital TV network of the Internet. In the same way as during the implementation step, the training step allows interaction between vendor and client, and also an interactive or non-interactive participation by persons other than the client, either as a marketing action or training.

After the implementation and training steps comes the technical support and relationship with the client by way of post-sales action, that are preferably carried out by remote means, such as, for example, chats over the Internet or call center, without excluding any others.

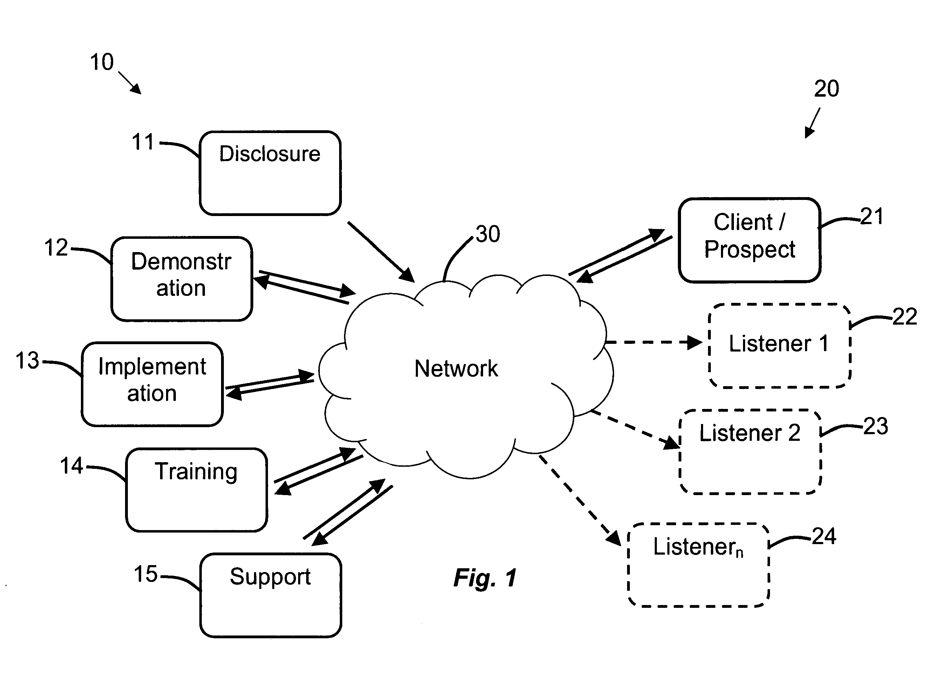

The invention also refers to a system for carrying out a sales cycle, by remote means. Figure 1 is a schematic representation of the system of the present invention. On the one hand is the provider or vendor (10) of the object, in which the sale steps are unleashed, pursuant to the process already described and, on the other hand is the prospect (20) which may become a client and, in certain steps, there is real time interaction between provider or client.

The system comprises, in relation to the provider (10), means (11) to disclose an object remotely, means (12) to make a presentation or demonstration of the object, in real time and with a participatory presence, means (13) to implement or deliver the object also by remote means, means (14) to carry out remote training and means (15) to provide client support by remote means.

The means listed above may be any suitable means for the transmission of remote means over a network (30), such as computers, servers, PDAs or digital TV.

Said means may be connected to the network (30) by way of a communication backbone. The network (30), in turn, may be any suitable data transmission network, such as the Internet, a mobile telephony network or a Digital TV network having a return channel. Naturally, there may be interaction between one or more of these networks.

In relation to the prospect or client (20), some can participate interactively in the process of the present invention (21) and others only as listeners (22-24). Theoretically, there is no limit on the number of interactive participants (21) and listeners (22-24), which may be limited or unlimited depending on the specific aspects imposed by the provider (10).

In the same way, both the prospect/client (21) as the other participating merely as listeners (22-24) must have means of access to a network interaction with the provider (10) or merely to receive data provided by the provider (10). Said means may be any suitable means for receiving and sending data by a communication network, such as, but not limited to, personal computers, PDAs, Digital TV etc.

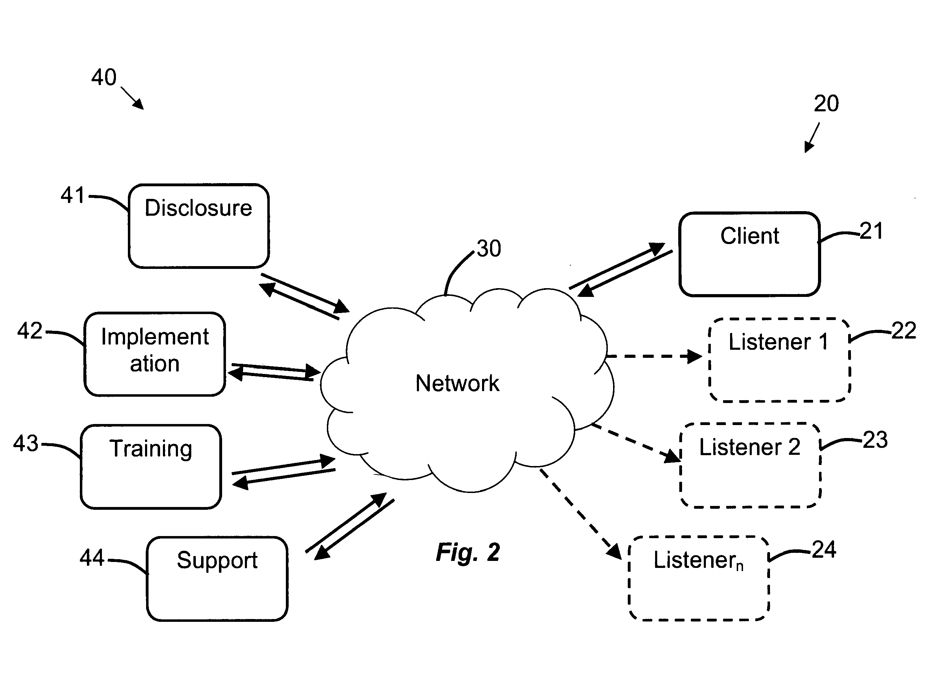

Figure 2 represents a schematic illustration to carry out the software implementation process according to the second aspect of the present invention.

On the one hand, the system provides means (41) to carry out a demonstration of the software, in real time and with participatory presence, means (42) to deliver and implement the software, means to carry out remote training at the client, and means (44) to provide client support by remote means.

The means listed above may be any suitable means for the transmission of remote means over a network (30), such as computers, servers, PDAs or digital TV.

These means may be connected to the network (30) by way of a communication backbone. The network (30), in turn, may be any suitable data transmission network, such as the Internet, a mobile telephony network or a Digital TV network having a return channel. Naturally, there may be interaction between one or more of these networks.

In relation to the client (20), some can participate interactively in the process of the invention (21) and others merely as listeners (22-24), as stated above.

Further, there is no limit on the number of interactive participants (21) and listeners (22-24), which may be limited or unlimited depending on the specific aspects imposed by the vendor (40).

In the same way, both the client (21) and the others participating as listeners (22-24) must have means of access to a network to interact with the vendor (40), or just means to receive data provided by the provider (40), depending on whether there is interaction or not. Such means may be any suitable means for receiving and sending data by way of a communication network, such as, but not limited to, personal computers, PDAs, Digital TV etc.

To improve interaction, other hardwares such as cameras, microphones etc. can also be used.

The present invention presents a series of advantages in relation to the processes and systems known in the state of the art because, firstly, it allows a global solution for the sales cycle by remote means, and also enables a effective participation and interaction between provider or vendor and prospects or clients.

Moreover, the present invention allows a cost reduction in the disclosure and implementation of products and services, particularly in the disclosure and implementation of a software, because all the steps can be carried out by remote means and electronically, without the need for physical relocation of personnel, both for the provider / vendor, and for the prospect /client.

What is more, there is the possibility of opening the processes of disclosure and implementation to third parties, who can participate interactively or merely as listeners, and also enables a greater disclosure and demonstration of cases of concrete use, leveraging marketing actions, sales and relationships with potential clients and already existing clients.

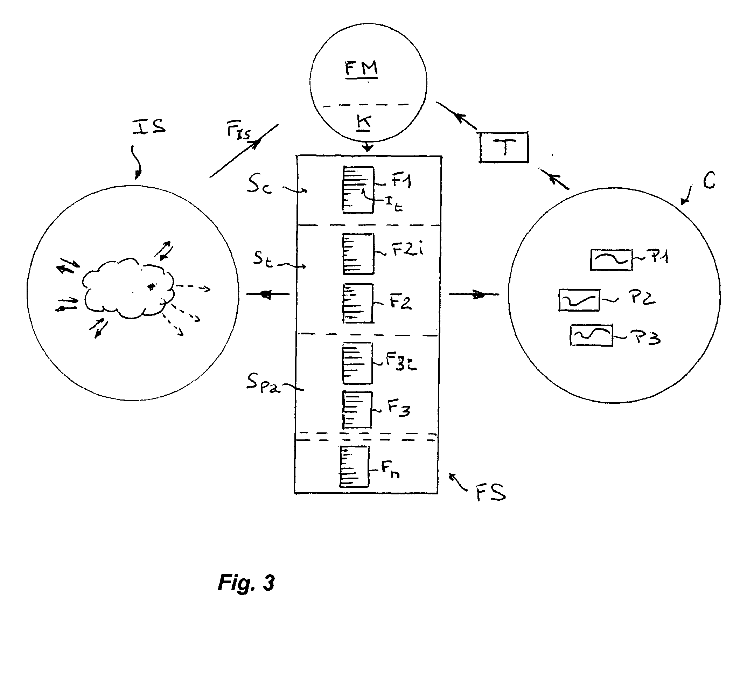

Figure 3 shows how the successive items formats F1, F2, ..., Fn are built in a format for steps memory FS in connection with a converter C, for being used in the interactive sales cycle system IS here-above described. If the first step is, for instance, the customization step Sc as the former with an items format F1, the current step is the training step St wherein the construction of format F2 is here explained.

The first format F1 results of preceding studies concerning the items Iₜ to be discussed according to the type of client or prospect and product or object to be sold. The first format is extracted from a formats memory FM of a process digital unity (not represented), which also comprises the converter C and a calculator K

The formats memory contains all the formats to be used to initiate different steps.

This first format F1 is transformed in a client profile P1 by the converter C of the process unity. This converter translates the different degrees of interest of the corresponding items Iₜ in corresponding profile aspects by similarity with memorized patterns of the converter. Then the converter determines the memorized client profile P1 which is the nearest of the collected profile aspects according to a similarity function. Optionally, the collected profile aspects can be registered as a new client profile.

Then, for the next training step St, the converter transfers, through a correlation table T, an identification of the corresponding format F2i to the formats memory FM, as the one to be used to initiate the training step St. This items format F2i is applied in connection with the interaction system IS between the demonstrator and the client/prospect for the training step St.

Now, during the interaction process, the provider/demonstrator determines more specific features of the client/prospect profile. For instance, considering the client profile P1 is a very experimented person for the product, associated with a poor attention to follow the prescriptions in order to achieve the product. Then, the items format F2i selected for the training step St between other formats is focused on the main mounting steps with little details. However, during the training step, it has been pointed out by interactivity exchange over the Internet that the client presents a light defect of memory, and the explanations must be repeated. The evolution of the format is then transferred (arrow F_{IS}) by the provider to the formats memory FM that calculates a more specific format F2 in connection with the calculator K of the process unity.

The more specific format F2 is then sent to the converter C to determine the more specific client profile P2 to be used for the next step of post-sale assistance Spa. Thus, this profile involves particular attention to insure that each step of reasoning is well understood. The conversion table T identifies the item format Fi3 of the formats memory FM to be used in the Spa step with a decomposition of reasoning.

As for the training assistance or any current step, the initial items format F3i is improved during the interaction exchange to constitute a more specific format F3, which will be converted in a client profile P3 to be used for identifying the items format of the next step.

It must be recognized that although the present invention has been described in relation to its particular embodiments, persons skilled in the art may develop variations based on the teachings disclosed above. Therefore, the claims appended hereto should be interpreted as all-inclusive of all the equivalents contained within the breadth and scope of the present invention.

## Claims

**1.** A sales cycle process that comprises at least the steps of:
- carrying out a demonstration (12) of said product or service in connection with a client profile,
- implementing (13) and delivering said product or service to the client,
- training (14) the client to use said product or service, and
- providing technical support to client in relation to said product or service,
wherein the demonstration, implementing, training and technical support steps are carried out remotely and in real time by a physical person having a participatory presence, conducting interaction between provider and at least part of the prospects or clients (21) by entering in real time interactive information which are specific of each step to direct the interactive exchange of the next step, the interactive information and exchange being formatted (FM) to define specific client profiles (P2, P3) adapted from step to step.

**2.** A sales cycle process according to claim 1, wherein each format includes a series of calibrated items specific of a corresponding current step in order to specify a client profile (P1, P2, P3) in connection with needs of the current step (Sc, St, Spa), said profile being then applied to calibrate the items of the next step.

**3.** A sales cycle process according to claim 1 or 2, wherein a disclosure step of a product or service in a prospective preliminary phase is included.

**4.** A sales cycle process according to clam 3, wherein the disclosure step of the product or service is carried out by marketing actions over Internet

**5.** A sales cycle process according to anyone of the preceding claims, wherein a step of negotiating the technical and contracting extents after the demonstration phase.

**6.** A sales cycle process according to claim 1 or 2, wherein the demonstration step is carried out by a customized presentation for a specific prospect or client, such that the client can interact with the demonstrator.

**7.** A sales cycle process according to claim 6, wherein persons other than the prospect or the client can also interact with the demonstrator.

**8.** A sales cycle process according to claim 6, wherein persons other than the prospect can watch the presentation, without interaction with the presenter.

**9.** A sales cycle process according to anyone of the preceding claims, wherein the demonstration step is preceded by a demonstration-scheduling step.

**10.** A sales cycle process according to claim 5, wherein the negotiating step or delivery of said product or service is followed by a contract-sealing step by remote means using a digital signature.

**11.** A sales cycle process according to anyone of the preceding claims, wherein the implementation step or delivery of said product of service to the client is carried out remotely over the Internet, with real time interaction between the parties.

**12.** A sales cycle process according to claim 11, wherein the implementation step or delivery of said product of service to the client is carried out remotely over Internet, concomitantly, without interaction by other participants.

**13.** A sales cycle process according to anyone of claims 1 to 10, wherein the implementation step or delivery of said product of service to the client is carried out remotely over the Internet in real time without interaction between the parties.

**14.** A sales cycle process according to anyone of the preceding claims, wherein there is a limited number of interactive accesses between the parties.

**15.** A sales cycle process according to anyone of claims 1 to 13, wherein there is no limited number of non-interactive accesses between the parties.

**16.** A sales cycle process according to anyone of the preceding claims, wherein the process steps are achieved by means of the Internet, Digital TV network, or cellular and/or telephone communication network.

**17.** A sales cycle process according to anyone of the preceding claims, wherein said product or service is a software.

**18.** Software implementation process by remote means that comprises the steps of:
- carrying out a demonstration of the software;
- implementing said software at the client;
- training the client to use said software;
- providing technical support to the client in relation to said software according to any of the preceding claims;
**characterized in that** the demonstration step is carried out remotely and in real time by a person having a participatory presence, allowing interaction between the provider and at least some of the persons that make up the prospect or client, by the fact that the implementation and training steps are carried out by remote means, and by the fact that the technical support is carried out by remote means.

**19.** Software implementation process according to claim 18,
**characterized in that** the demonstration step is by customized presentation for a specific prospect or client, such that said prospect or client can interact with the presenter.

**20.** Software implementation process according to claim 18,
**characterized in that** the demonstration step is by customized presentation for a specific prospect or client, such that said prospect or client can interact with the presenter, and persons other than the prospect or client can also interact with the presenter.

**21.** Software implementation process according to claim 18,
**characterized in that** the demonstration step is by customized presentation for a specific prospect or client, such that said prospect or client can interact with the presenter, and persons other than the prospect or client can watch the presentation, without interaction with the presenter.

**22.** Software implementation process according to claim 18,
**characterized in that** the software demonstration step is preceded by a demonstration-scheduling step.

**23.** Software implementation process according to claim 18,
**characterized in that** the implementation step of said software is preceded by a contract-sealing step by remote means using a digital signature.

**24.** Software implementation process according to claim 18,
**characterized in that** the implementation step of said software is carried out remotely, with real time interaction between the parties.

**25.** Software implementation process, according to claim 18,
**characterized in that** the implementation step of said software is carried out remotely, without real time interaction between the parties.

**26.** Software implementation process, according to claim 18,
**characterized in that** the implementation step of said software is carried out remotely over the Internet, with real time interaction between the parties and, concomitantly, in real time but without interaction with other parties.

**27.** Software implementation process, according to claim 18,
**characterized in that** the steps of the process carried out remotely are achieved by means of the Internet, Digital TV network, or cellular and/or telephone communication network.

**28.** Software implementation system to implement a software implementation process according to any of claims 18 to 27, **characterized by** comprising means (41) to carry out a demonstration of the software, in real time and with a participatory presence, means (42) to deliver and implement the software, means to carry out remote training at the client, and means (44) to provide client support by remote means.

**29.** System to carry out a sales cycle, **characterized by** comprising, on the provider side, means (11) to disclose an object remotely, means (12) to make a presentation or demonstration of the object, in real time and with a participatory presence, means (13) to implement or deliver the object also by remote means, means (14) to carry out remote training and means (15) to provide support for client (2) by remote means and by the fact that, on the prospect side, it comprises means (20) to access a network (30) for interaction with the provider (10).

**30.** System according to claim 29, **characterized in that** said means are any suitable means for the transmission of remote means over a network (30), such as computers, servers, PDAs or digital TV.

**31.** System according to claim 30, **characterized in that** said network (30) is a data communication network, such as the Internet, a mobile telephony network or a Digital TV network having a return channel.

**32.** System, according to claim 31, **characterized in that** third parties (22-24) can access the network, but without interactive participation.

**32.** System, according to claim 29 or 32, **characterized in that** there is no limit on the number of interactive participants (21) and listeners (22-24).

**33.** System, according to claim 30 or 33, **characterized in that** there is a limited number of interactive participants (21) and listeners (22-24).

**35.** System, according to claim 36, **characterized in that** said means may be any suitable means for the transmission of remote means over a network (30), such as computers, servers, PDAs or digital TV.

**36.** System, according to claim 36, **characterized in that** said means are connected to the network (30) by way of a communication backbone.

**37.** System, according to claim 36, **characterized in that** the network (30) is a suitable data transmission network, such as the Internet, a mobile telephony network or a Digital TV network having a return channel.

**38.** System, according to claim 36, **characterized in that** some participants may participate interactively (21) and others only as listeners (22-24).

**39.** System, according to claim 36 or 40, **characterized in that** there is no limit on the number of interactive participants (21) and listeners (22-24).

**40.** System, according to claim 36 or 40, **characterized in that** there is a limit on the number of interactive participants (21) and listeners (22-24).
